# EUROPEAN PATENT SPECIFICATION

(11) **EP 1 595 392 B1**
(45) Date of publication and mention of the grant of the patent: **09.05.2012**
(21) Application number: 04711072.1
(22) Date of filing: 13.02.2004
(51) Int. Cl.: H04N 5/262

(54) **CAMERA HAVING PANNING AND/OR TILTING FUNCTIONALITY**
KAMERA MIT PANORAMA- UND/ODER NEIGUNGSFUNKTIONALITÄT
CAMERA A FONCTIONNALITE PANORAMIQUE ET/OU D'INCLINAISON VERTICALE

(30) Priority: 17.02.2003 SE 0300428
(43) Date of publication of application: 16.11.2005
(73) Proprietor: Axis AB, 223 69 Lund (SE)
(72) Inventor: KANNERMARK, Per, S-212 28 Malmö (SE); LUNDBERG, Stefan, S-224 56 Lund (SE)
(74) Representative: Andersson, Mikael Per Robert
(86) International application number: PCT/SE2004/000198
(87) International publication number: WO 2004/073299

(56) References cited:
- EP-A2- 0 328 356
- WO-A1-02/01876
- WO-A1-02/30122
- WO-A1-03/056812
- WO-A2-01/48537
- WO-A2-02/13515
- WO-A2-98/47291
- US-A- 5 187 571
- US-A- 5 282 268
- US-A- 5 657 073
- US-A- 6 141 034
- US-B1- 6 317 166

## Description

### Technical Field of the Invention

The present invention relates to a camera having panning and/or tilting functionality and a method for such a camera.

### Background of the Invention

Cameras are widely used in order to make it possible to see or study remote sites. For example, cameras are used in surveillance systems and for presenting specific objects or surroundings to persons having access to such a camera via a network. For the reason of extending the area that may be viewed via a camera, or for other reasons, different types of pan/tilt solutions have been used in the past.

The most common solutions have been to provide the camera with a motor driven mechanism for turning the camera in the horizontal direction, i.e. panning, in the vertical direction, i.e. tilting, or in both the horizontal and vertical direction, i.e. panning and tilting, in order to scan a greater area than is possible with a stationary camera. Other implementations of the pan and/or tilt functionality have also been presented. One such implementation is to turn only the objective of the camera and another is to position a turning mirror in front of the camera.

All these solutions involve mechanical turning of devices of the camera or in the near proximity of the camera in order to achieve pan and/or tilt functionality. As commonly known, such turning of devices inevitably results in mechanical deterioration of at least the components involved in the turning. Thus, the cameras equipped with the above mentioned implementations of pan tilt functionality have to be serviced frequently, which results in extra work and, if the cameras are not maintained regularly, in the loss of pan tilt functionality until the camera is properly maintained. Further, cameras having pan tilt functionality implemented according to the above mentioned tends to be much more expensive than a camera having a fixed view. Accordingly, the present arrangements for providing a camera with mechanical pan and/or tilt functionality are unsatisfactory.

In US 5 657 073 and WO 02/13515 multi-camera systems used for the production of panoramic or panospheric output images by seamlessly merging a number of simultaneous and partly overlapping input images is disclosed. The systems comprise a plurality of cameras which are arranged to produce simultaneous and partly overlapping input images. The simultaneous and partly overlapping input images are then seamlessly merged into a single panoramic or panospheric output image. Panning and tilting may then be made by selecting a portion of the output image for display onto a display device.

The production of pan and/or tilt functionality disclosed in US 5 657 073 and WO 02/13515 are unsatisfactory since it require a high image processing capacity and since it is an expensive system comprising a plurality of cameras.

US 6 141 034 describes the use of one single standard camera, being turned in different directions in order to capture different views for a final panoramic/panospherical view, or a plurality of separate cameras angled in relation to each other in such a way as to capture the entire panoramic view. Further, US 6 141 034 describes different methods for combining different views, different camera mount designs suitable to capture the images, different encoding methods for storing and transporting images as efficient as possible, and different designs of presentation units for displaying the panoramic or panospherical views.

### Summary of the Invention

It is an object of the present invention to provide a camera having improved pan and/or tilt functionality.

This object is accomplished by means of a camera according to claim 1 and by means of a method according to claim 7. Preferred embodiments of the invention are disclosed in the dependent claims.

A first aspect of the invention relates to a digital camera having pan and/or tilt functionality, comprising an image processing means for processing digital image data, at least two image sensors arranged to output image data detected by the image sensors and to transfer the image data from each of the at least two image sensors pixel by pixel, an image sensor selector including an output arranged to provide a signal indicating from which image sensor a pixel to be forwarded to said image processing means shall originate, the selection is based on at least one value indicating the present pan and/or tilt, and a multiplexer connected to the at least two image sensors, the image processing means and said output of the image sensor selector, the multiplexer being arranged to receive one pixel from each of the at least two image sensors during one pixel clock cycle and to forward the pixel originating from the image sensor indicated by the image sensor selector.

A second aspect of the invention relates to a method in a camera having pan and/or tilt functionality, said method comprising the acts of:
sending image data pixel by pixel from at least two image sensors to separate inputs of a multiplexer,
generating a control signal indicating from which image sensor the pixel to be forwarded is received, the generating of said control signal is based on at least one value indicating the pan and/or tilt for the image transfer in progress and the position within each of the at least two image sensors of the pixels presently received at the multiplexor,
sending the control signal to said multiplexer indicating the image sensor from which the present pixel is to be forwarded, and
forward the pixel from the input of said multiplexer receiving the pixel originating from the image sensor indicated in the control signal to the DSP.

The fact that the camera according to the invention includes at least two image sensors makes it possible to register at least twice as much image information than with a digital camera having only a single image sensor. Thus, in relation to a camera having a single image sensor the camera according to the invention may register image information of a much larger area without reducing the sharpness or wealth of details of the image that may be represented by the registered image information. Also, the digital camera according to the invention may register image information of an area having the same size as an area registered by means of a camera having a single image sensor, but then the image information registered by means of the digital camera according to the invention represents much greater sharpness or wealth of details.

Additionally, by arranging a multiplexer that selectively may forward a pixel from any one of the image sensors at every pixel clock cycle, it may be possible to select specific portions of the image data from one image sensor and specific portions of the image data from another image sensor in real time. Accordingly, if the size, i.e. number of pixels, of the image that are to be processed and provided to a user is less than the total size of an image represented by the at least two image sensors together, the position, within the image represented by the at least two image sensors in combination, i.e. a view of a monitored area, of the image that is provided to the user may be dynamically altered by means of making the image selector changing the control signal controlling the multiplexer. Thus, the multiplexer, which is controlled by the image sensor selector, makes it possible to select the image data to be forwarded to the image processing means based on at least one value indicating the present pan and/or tilt and, thus, a virtual pan and/or tilt functionality may be obtained. Further, the rejection of pixels from a plurality of image sensors not to be included in a resulting pixel stream and forming a resulting pixel stream being a subset of the total number of pixels sent from the plurality of image sensors, wherein the resulting view represents a portion of a monitored area, results in that the resulting pixel stream may be provided in real time, i.e. no buffers may be necessary.

Accordingly, the digital camera according to the invention may provide pan and/or tilt functionality without the use of moving parts for implementing this functionality. Thereby, extending the durability of such digital camera, especially if the pan and/or tilt functionality of the camera is frequently used.

Further, because the DSP may be provided with a subset of the image data of one image sensor and a subset of the image data of another image sensor, the digital camera may generate an image from the image data captured by the at least two image sensors without making the image processing means process all image data captured by the at least two image sensors.

Additionally, the implementation according to the invention may be more cost effective than the prior art implementations.

According to one embodiment the digital camera includes a timing generator that is connected to the at least two image sensors of the digital camera. Additionally, the timing generator and the connections to the at least two image sensors are arranged to provide the at least two image sensors with synchronized timing signals.

By synchronizing the timing signals provided to the at least two image sensors the switching between image data from different image sensors may be implemented in a simple manner. According to one embodiment the multiplexer only has to switch between the signals from different image sensors and directly forward the signal to the image processing means without any buffering.

According to another embodiment both pixel clock signals and reset signals provided to the at least two image sensors are synchronized. This means that the pixels of the rasterized pixel stream that is sent simultaneously from the at least two image sensors to the multiplexer represent corresponding pixels, in regard of position within each image sensor. Thus, the at least two image sensors start outputting a first pixel of an image frame essentially simultaneously and starts outputting every pixel following the first essentially simultaneously. By means of this embodiment, it may be possible to define a resulting pan and/or tilt image of essentially the same size as a view from one of the image sensors. The resulting pan and/or tilt image may include image data from more than one of the at least two image sensors and all image data representing the resulting pan and/or tilt image may be forwarded to the image processing means during one transfer cycle of an image frame of one of the at least two image sensors without requiring more capacity from the DSP than a digital camera having one single image sensor. Thus, in respect of time and in respect of the amount of image data that has to be processed by the image processing means, the arrangement according to the invention does not have to be provided with more memory for storing and processing the at least double amount of image data originating from at least two image sensors and the processing frequency does not have to be increased in order to provide the same frame rate as in a camera having one image sensor. Accordingly, it may be very easy to implement the invention in existing technology.

According to another embodiment the camera further comprises a light focusing system arranged to focus reflected light from at least a first view and a second view to said at least two image sensors. The at least first view and second view are adjacent to each other and wherein two adjacent views are overlapping each other. The light from the at least two different views are focused onto the at least two image sensors for registration of an image at each image sensor. By making the at least two adjacent views overlap each other the pixels originating from one image sensor may easily be separated from pixels originating from another image sensor and then reordered and combined with pixels from another image sensor by stitching, i.e. recognizing common features within the image data from different image sensors and rearranging the image data into a single non distorted image, because the image from one image sensor includes a portion of the image of the other image sensor.

All the above mentioned are of course also applicable to cameras comprising a greater number of image sensors receiving light from adjacent views. For example, four image sensors may be arranged horizontally after each other, making it possible to get a great pan range, four image sensors may be arranged vertically, making it possible to get a great tilt range, or four image sensors may be arranged in a square, i.e. two horizontally arranged image sensors positioned vertically adjacent to two other horizontally arranged image sensors, making it possible to both pan and tilt. The number of image sensors may also be greater than four.

Another advantage that the digital camera according to the invention may possess is that multiple users may request images from the same camera but with different pan and/or tilt settings without any conflict between the requests. This may be achieved by, for example, providing each user with images from different output cycles of the image sensors and individually adapting the value controlling the image sensor selector for each image output cycle in accordance with the request of the user that is to receive that image. Such access to a camera having pan and/or tilt functionality is not practically possible to implement for a camera provided with a prior art mechanical pan and/or tilt arrangement.

A further scope of applicability of the present invention will become apparent from the detailed description given below. However, it should be understood that the detailed description and specific examples, while indicating preferred embodiments of the invention, are given by way of illustration only, since various changes and modifications within the scope of the claims will become apparent to those skilled in the art from this detailed description.

### Brief Description of the Drawings

Other features and advantages of the present invention will become apparent from the following detailed description of a presently preferred embodiment, with reference to the accompanying drawings, in which
Fig. 1 is a schematic block diagram of one embodiment of a digital camera according to the invention,
Fig. 2 is a schematic view of one possible way to arrange the views of the digital camera in Fig. 1,
Fig. 3 are schematic diagrams of the transfer of pixels from the image sensors to the multiplexer of the digital camera in Fig. 1,
Fig. 4a is a schematic diagram of the transfer of pixels from the multiplexer to the DSP in the digital camera in Fig. 1, when a user/target view is positioned as showed in Fig. 2,
Fig. 4b is a schematic diagram of an intermediate image frame corresponding to the pixel stream in Fig. 4a,
Fig. 4c is a schematic diagram of a resulting image frame or resulting view wherein the pixels have been rearranged in order to display a continuous image,
Fig. 5a shows an example of a possible way to arrange the image views for monitoring a specific area and a possible selected user/target view within the composition of image views,
Fig. 5b shows a schematic diagram of an intermediate image frame resulting from the image views and the selected user/target view of Fig. 5a,
Fig. 5c shows a schematic diagram of a resulting view provided by rearranging the intermediate view of Fig. 5b, and
Figs 6a-c are schematic views depicting some possible view arrangements according to the invention.

### Detailed Description of Embodiments

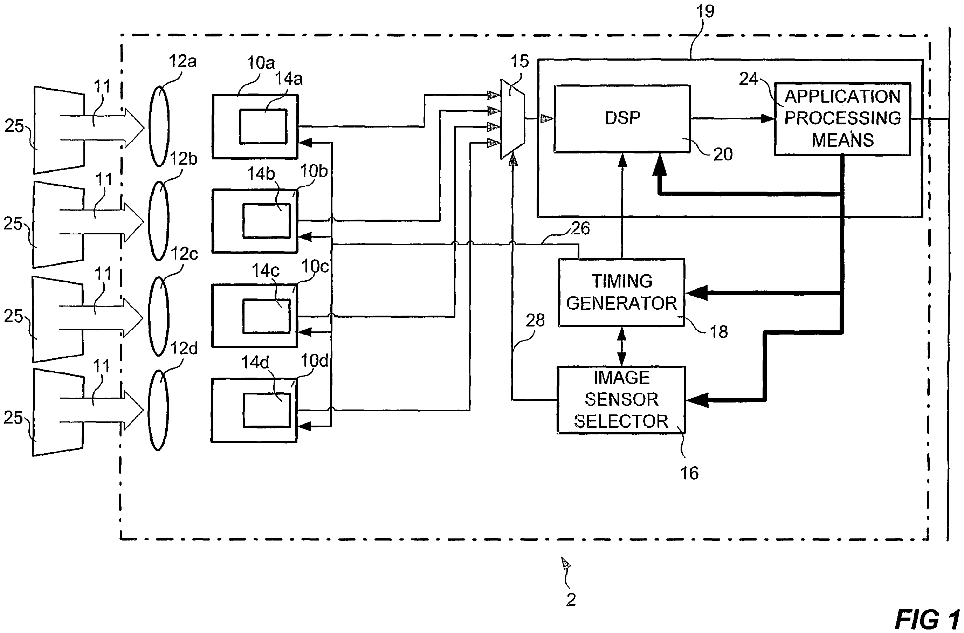

In Fig. 1, a schematic block diagram of one embodiment of a digital camera 2 according to the invention is showed. The digital camera 2 comprises four image sensors 10a-d, each arranged to detect light 11 that is received via a lens system 12a-d and deliver pixels representing the detected light, analogue processing means 14a-d, a multiplexer 15, an image sensor selector 16, a timing generator 18, and an image processing means 19 including a Digital Signal Processor 20 (DSP) and application processing means 24. The digital camera obviously also includes other features and functions, not shown, that are known to a person skilled in the art. The digital camera may be any kind of digital camera, e.g. a surveillance camera, a web camera or other network enabled cameras, a handheld camera, digital cameras having analogue image output, etc.

The camera 2 captures an image by detecting the reflected or transmitted light 11 from objects within a view 25, wherein a view 25 is a part of the environment or a monitored area that is "seen" by the lens system 12a-d and the image sensors 10a-d. Thus, the light 11 is captured by lens systems 12a-d and directed onto the image sensors 10a-d, which either may be or include Charge Coupled Devices (CCD), CMOS-type image sensors or other types of sensors. Each image sensor may output rasterized pixel streams representing captured sequential image frames.

The monitored area may be a "three dimensional" environment such as a warehouse, a corridor, parking area, a room, etc. or it may be a "two dimensional" environment such as a wall, a desktop, an entrance door, etc.

Each image sensor 10a-d is controlled by means of timing signals 26 that are provided by the timing generator 18. The timing signals 26 required by an image sensor 10a-d may vary depending on the manufacturer and/or the type of the image sensor. However, the image sensors 10a-d, according to one embodiment of the invention, require at least one or a plurality of input signals for timing an output of detected pixels, hereinafter called pixel clock signal, and a reset signal for resetting the sensors. The pixel clock signal may, for example, include a signal providing horizontal transfer clock and a signal providing a vertical transfer clock, thus, making it possible to control or learn the position of the pixel that is to be or is outputted at any given time. The timing generator 18 that generates these timing signals 26 may be a timing generator specially designed for providing a specific image sensor with timing signals 26 or a more general timing generator that may be adapted to the image sensor that are used in the digital camera. Timing generators like these are well known to a person skilled in the art. Said pixel clock signal and said reset signal may be synchronised for all image sensors 10a-d, e.g. by utilising a common pixel clock signal and a common reset signal for all image sensors. Details regarding one purpose of providing the image sensors with synchronised pixel clock signals and reset signals in said embodiment will be described below.

The output from an image sensor 10a-d is, according to one embodiment, a digital pixels stream which is forwarded to the multiplexer 15. According to this embodiment each image sensor 10a-d includes a light sensitive array, which generate a pixel stream wherein each pixel value is represented by an analogue value, connected to an analogue processing means 14a-d. The analogue processing means 14a-d may include an analogue image processing means and an Analogue to Digital converter (A/D converter). The analogue processing means 14a-d performs initial image processing and may be of a type that is commonly utilized in digital camera systems of today and that is well known to a person skilled in the art. Some examples of image processing that may be performed in the analogue processing means are CDS (Correlated Double Sampling), black level correction, change of gamma, etc. After the image processing the analogue signal is converted to a digital signal by means of an A/D-converter before it is forwarded to the multiplexer 15. By converting the image data to a digital signal before the signal reaches the multiplexer 15 it is possible to utilize digital multiplexing, which is more accurate and easier to implement than analogue multiplexing.

However, according to another embodiment, not shown, the image sensors 10a-d do not include said analogue processing means 14a-d and therefore a single analogue processing means may be arranged between the multiplexer 15 and the DSP 20.Thus, the output from the multiplexer 15 is provided to the DSP 20 via the analogue processing means. Accordingly, the multiplexer 15 should be able to perform analogue multiplexing. Using this implementation one analogue processing means only has to be implemented.

According to one embodiment, the multiplexer 15 includes four inputs, each being connected to an image sensor 10a-d, and one output. The multiplexer, regardless of whether it performs analogue or digital multiplexing, receives image information from all four image sensors at said inputs pixel by pixel. The multiplexer 15 may also be called pixel selector 15. In other words, the image data, which is transferred from the image sensor pixel by pixel, from one of the image sensors is received pixel by pixel at the input of the multiplexer corresponding to the image sensor. Further, it receives a select signal 28 from an image sensor selector 16. The select signal control which image signal to pass on to the DSP 20, i.e. when the multiplexer 15 receives a select signal having a specific value, the image signal at an input of the multiplexer corresponding to said specific value is passed on to the output of the multiplexer 15 until the value of the select signal is changed to another value that may indicate another input. Accordingly, the multiplexer 15 may be used to vary the origin of the image data provided to the DSP 20. Thereby, the resulting image signal, representing one image frame of a sequence of image frames or one single image, may, after the multiplexer 15, include image information originating from a plurality of views 25, i.e. from a plurality of image sensors. For example, the resulting image signal representing one image frame may include some image information originating from the image sensor 10a, some originating from the image sensor 10b, etc.

The image sensor selector 16 is generating and providing the multiplexer 15 with said select signal 28. Thereby, the image sensor selector 16 controls what pixels that are sent to the DSP, in regard of the image sensor 10a-d from which the pixels originate. The select signal include location parameters determining the border of a resulting view within the monitoring area.

In order to generate a control signal that makes the multiplexer 15 forward a desired pixel, from the different image sensors, the image sensor selector 16 may base the generation of the control signal on a function which depends on a signal/value from a predetermined selection scheme programmed into the camera or on an external control signal/value provided to the camera system. The external control signal/value may be sent from an input means that makes it possible to indicate directions or positions. The signal/value may then be used in said function of the image sensor selector 16 to control which portions from said image sensors 10a-d to forward to the DSP 20 and, thus, which portions of the monitored view that are included in the resulting view.

Said input means may be a computer, a Personal Digital Assistant (PDA), a mobile telephone or an ordinary telephone, all having an application for controlling the pan/tilt of the camera. Also, the input means may be an input means that is connected to any of the above mentioned input means or another system in order to, more or less, directly providing said directional information to the camera, such input means may be a joystick, a trackball, a mouse, arrow keys, etc.

In order to readily control the composition of the rasterized pixel stream received at the DSP 20, the image sensor selector 16 is provided with pixel clock signals from the timing generator 18, indicating the progress of the present output of pixels from the image sensors 10a-d. Thus, the pixel clock signal may for instance be signals similar to the signals sent to the image sensors 10a-d.

The image sensor selector may be implemented by means of program code generating relevant signals and setting relevant registers in the hardware.

One way of generating a select signal that enable pan/tilt functionality according to one embodiment will be presented below.

The DSP 20 receives the selected pixels in a pixel stream and timing signals in order to process the image data. This is performed in a manner known by a person skilled in the art. In alternate embodiments of the invention the DSP may be replaced or complemented with an processor or logic embodied in hardware, software, or firmware which accomplished the above referenced functions. These include but are not limited to: a PLD, a PGA, a processor, a combination of registers and buffers, a pixel data path or a pixel pipeline.

The application processing means 24 includes applications and functions of the camera. For example, it may include an interface application for setting parameters of the digital camera, functions for formatting the image data into specific formats, applications for altering the image, and/or protocols for communication via networks or other physical interfaces. Also, the application processing means may be arranged to provide data and/or control signals to the image sensor selector 16, the timing generator 18 and the DSP 20.

The application processing means 24 receives the digitally processed image information from the DSP 20 and perform a final processing of the image. This final processing of an image may be formatting the image into a known image format, e.g. jpg, tiff, bmp, etc., a known video streaming format, e.g. avi, mpeg1-4, or other known image formats designed for transmission or storing of still images or video images. The final processing of an image may also include rearranging pixels originating from different image sensors, but belonging to in a pixel stream of representing image frame, into one continuous image, e.g. by separating pixels of a specific view from the pixels of other views and stitching the separate parts together in a correct order, providing the image with a graphic overlay, such as time stamps, company logos etc., and other types of processing known to a person skilled in the art. The rearranging of pixels of a pixel stream of an image may, according to one embodiment, include the acts of buffering the pixels of the pixel stream is associated with one image frame, reorder the pixels based on location parameters that identifies a user view or target view within the view covered by all the image sensors and that where valid when the pixels where selected, and deleting portions of the resulting image containing redundant image information, e.g. pixels representing the same portion may be present because of overlapping views from the separate image sensors. After rearranging the pixels the intensity of adjacent pixels, e.g. adjacent pixels from different image sensors, may be adapted, e.g. by filtration, in order to make the transition between areas originating from one image sensor and areas originating from another image sensor less visible.

Further, the rearranging of pixels of a pixel stream of an image frame may also be performed in a client computer receiving the image for displaying or storing. When the final processing of the image is performed the application processing means may send the image or sequence of images via a computer network to one or a plurality of receivers. A receiver may be a display, a computer, a PDA, a mobile telephone, an ordinary telephone, a surveillance center, a video server, a digital video recorder, an analogue video recorder, etc. all arranged for viewing and/or recording the images from the camera.

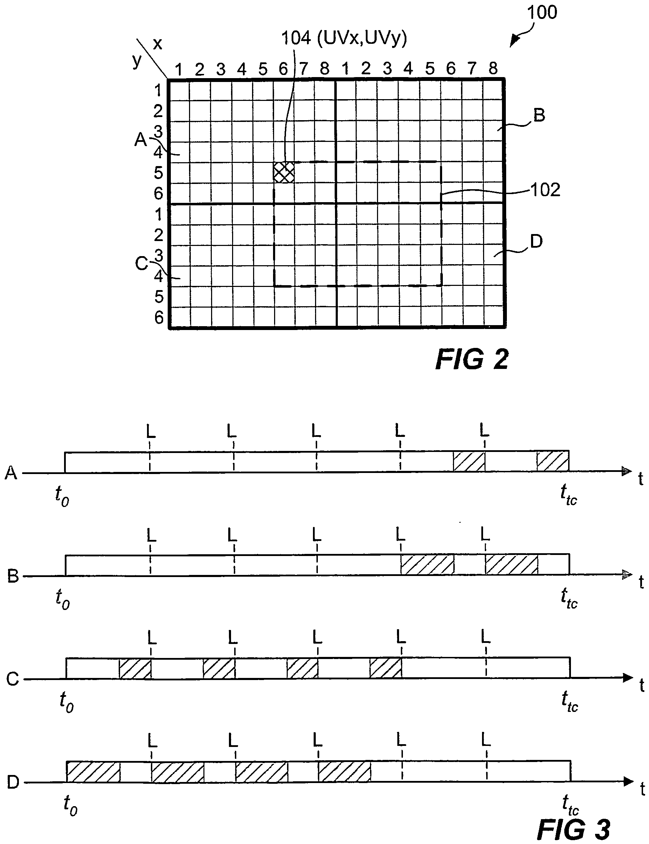

In order to facilitate the understanding of the invention, one way of controlling the camera according to the above mentioned embodiment now will be described.with reference to Fig. 1 and Fig. 2. In order to simplify the description each of the four image sensors 10a-d are assumed to be image sensors capturing an image of only 8x6 pixels. A person skilled in the art, however, understand that such image sensors are not feasible and that image sensors in reality are able to capture a considerably greater amount of pixels. Further, a person skilled in the art has the knowledge to easily apply the example below on a digital camera system including image sensors that is able to capture said considerably greater amount of pixels.

In the embodiment of the digital camera used in this example the image sensors 10a-d are provided with synchronized timing signals 26, relating to reset of the image sensors and to the transfer of pixels, i.e. the image sensor reset signals and the pixel clock signals to all four image sensors are identical or the same. This means that the pixel transfers from the image sensors 10a-d are synchronized, i.e. the pixels representing the same position within each image sensor 10a-d are transferred simultaneously. Further, the pixels, according to this example, are transferred from each image sensor 10a-d pixel by pixel and line by line.

Each view A-D, i.e. the subject or environment that is in position to be registered by each image sensor, that is captured or in position to be captured by the four image sensors 10a-d are shown in Fig. 2. As depicted in the figure, each image sensor 10a-d captures a fourth of a total view 100, i.e. a fourth of the subject or environment that is covered by means of all image sensors 10a-d together. In this example the lenses 12a-d and image sensors 10a-d are assumed to be arranged to register adjacent images without any overlap and missed portions, i.e. the lenses 12a-d and image sensors 10a-d is arranged with such perfection that it would be possible to generate a distortion free image by simply positioning the images from each image sensor adjacent to each other in the form of a square corresponding to the form of the total view 100. In reality it is difficult, maybe even impossible, to arrange the lenses 12a-d and image sensors 10a-d with such perfection, and thus in such an implementation it may be necessary to arrange the lenses 12a-d and the image sensors 10a-d so that image sensors capturing adjacent views register some common image information. By doing that the image information from different image sensors may be stitched together.

Image information in the total view 100 that is to be processed by the DSP 20 and that the image provided to at least one device for viewing is to be based on is indicated by a dashed line in the figure and is called user view or target view 102. In this example the user/target view 102 consist of the same amount of pixels as each of the image sensors 10a-d may provide. The position of the user/target view 102 may be determine by the position of the top left pixel 104 of the user/target view 102 within the total view 100. This position is hereinafter referred to UVx, UVy, wherein UVx represents the position of the pixel 104 of the user/target view 102 in the x-direction, i.e. pixel column, and wherein UVy represents the position of the pixel 104 of the user/target view in the y-direction, i.e. pixel line. The user/target view 102 may initially be centered in the total view 100 and when the user want to pan or tilt the view this may be performed by indicating a direction in which the user/target view 102 is to be panned or tilted. In such case, the indication of a direction is received at the digital camera 2 and provided to the image sensor selector 16, which calculates a new position of the top left pixel 104 of the user/target view 102 based on the indication of direction, e.g. the values of UVx and UVy are increased or decreased in accordance with the desired pan/tilt motion. The panning and/or tilting may also be controlled by providing positions instead of directions, e.g. a new position UVx, UVy of the top left pixel 104 of the user/target view 102 may be sent to the camera 2 and provided to the image sensor selector 16.

The image sensor selector 16 receives the panning/tilting direction and adjust the coordinates of UVx, UVy according to the direction and a predetermined or indicated distance. The UVx, UVy coordinate is then used by the image sensor selector 16 to generate the select signal 28 controlling the multiplexer 15.

As mentioned above, the pixel transfers from the image sensors 10a-d are synchronized and, thus, the pixel of the coordinate x,y from each image sensor is present at the inputs of the multiplexer 15 at the same time, wherein x correspond to the pixel column of the image sensor and y correspond to the pixel line of the image sensor. Further, in Fig. 3 it is shown that the initial pixel from each image sensor 10a-d is transferred simultaneously at the time t₀, which is a result of the image sensors being synchronized. Accordingly, during each pixel clock cycle the select signal 28 from the image sensor selector 16 determines which one of the four pixels, each from different image sensors, the multiplexer is to pass on to the output of the multiplexer.

Studying the situation depicted in Fig. 2 and assuming that the pixels from each image sensor 10a-d are outputted pixel by pixel starting with the top left pixel followed by the next pixel in the same row and when the last pixel of a row is outputted then outputting the leftmost pixel of next row, etc. Further, assuming that the image information indicated by a user, i.e. the pixels present in the user/target view 102, is to be transferred to the DSP in essentially one transfer cycle of the image sensors, then the multiplexer 15 has to forward image data from view D during the first five pixel transfers, i.e. the transfer of pixels 1,1 - 5,1 of view D. Note that the pixels having the corresponding positions within the other views/image sensors A, B and C, which is discarded because a pixel from view D is selected for each of the positions, do not carry any information that is useful within the user/target view 102. During the pixel transfer of the rest of the pixels of this first line the multiplexer 15 has to forward image data from view C, i.e. the pixels 6,1 - 8,1 of view C, thus discarding the pixels having the corresponding positions within the other views/image sensors A, B and C. The same selection of pixel origin is made for line 2-4, i.e. the first five pixels from view D are forwarded and the rest of the pixels of each line are forwarded from view C. When the timing generator 18 indicates pixel transfer of pixels from line five the multiplexer 15 has to forward pixels from view B and view A. The first five pixels of line five is forwarded from view B and the rest is forwarded from view A. The same selection of pixel origin is made for line six. Accordingly, all the pixels of the user/target view 102 is transferred in one transfer cycle of an image sensor 10a-d, independent of how many of or which image sensors 10a-d that are contributing image information to the resulting image. This is achieved by means of the pixel transfer being synchronized and that a pixel of a specific pixel position within the image sensors only being transferred through the multiplexer 15 from one of the image sensors, the pixel of the corresponding position within the other image sensors being discarded.

In Fig. 3, the pixel transfer for one transfer cycle, t₀-t_{tc} from each image sensor 10a-d to the multiplexer 15 is shown. The box extending from to to t_{tc} represent all pixels transferred from an image sensor 10a-d during one transfer cycle. The dashed lines L represent the boundary between pixels from different lines. The first pixel transferred during a transfer cycle from the image sensor transferred at time to and the last pixel transferred at time t_{tc}. Each transfer signal in Fig. 3 show image data transferred from each image sensor 10a-b, i.e. from each view A-D, wherein signal A shows the transfer from image sensor 10a, view A, signal B shows the transfer from image sensor 10b, view B, signal C shows the transfer from image sensor 10c, view C, and signal D shows the transfer from image sensor 10d, view D. In the Fig. 3 the data that are to be forwarded by the multiplexer 15 in accordance with the example above, i.e. the first five pixels from view D, then the next three pixels from view C, etc., is shown as hatched areas of the image data in the figures. Accordingly, at time to a pixel from each of the image sensors is transferred from each of the image sensors 10a-d, though only a pixel from one of the image sensors is passed through the multiplexer, at t0 the pixel from sensor 10d is passed through.

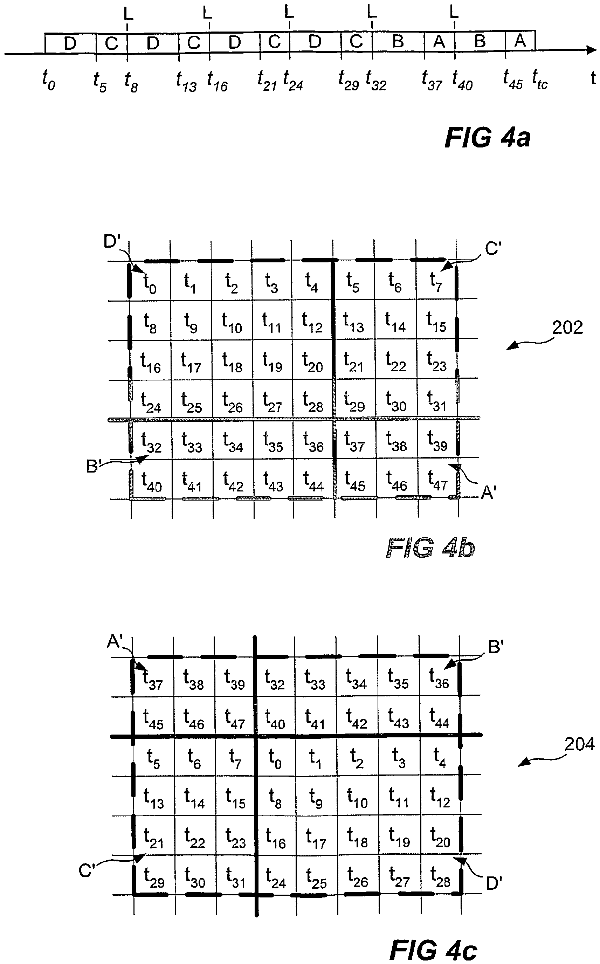

As mentioned above, the pixel transfers from the image sensors 10a-d are synchronised in this example and, thus, the image data forwarded from the multiplexer 15, showed in Fig. 4a, is of the same size as the image data transferred from any one of the image sensors 10a-d. Accordingly the process of transferring all pixels from the image sensors, rejecting the pixels not to be included in the pixels representing the user/target view 102 by means of the multiplexer 15, and transferring only the pixels representing the user/target view 102 to the DSP during a time period corresponding essentially to the time period of a image transfer cycle of any one of the image sensors 10a-d becomes possible, some minor delays of the signals along the signal path may be experienced. In Fig. 4a the origin of the image data transferred from the multiplexer 15 to the DSP 20, in accordance with the example above, is marked by naming the view that the data in each box originates from. Further, the time references, tₓ, in the figure indicates the number of pixel cycles that have passed from the start of the transfer of the image, wherein x is equal to said number of pixel cycles.

As mentioned above, the start of the pixel transfer and the pixel clock of the image sensors 10a-d in this embodiment are synchronised and, thus, the first pixels transferred from the image sensors have the same position within the image sensor, in this specific example the pixel transfer begin the transfer with the top left pixel of each image sensor and then proceed during the next pixel clock cycle with the next pixel in the same row, etc. For image sensors registering color images the image sensors preferably are provided with identical optical filter patterns. The use of the invention may in such case result in a pixel stream which, if directly inserted into an image frame 202 in the same manner as the pixels are transferred from the each of the image sensors and if the above user/target view position is selected, is represented by an image where the contribution D' from image sensor 10d, i.e. from view D, is positioned in the upper left corner of such an image, the contribution C' from image sensor 10c, i.e. from view C, is positioned in the upper right corner, the contribution B' from image sensor 10b, i.e. from view B, is positioned in the lower left corner, and the contribution A' from image sensor 10A, i.e. from view A, is positioned in the lower right corner. This is evident when studying Fig 4b in view of the resulting pixel stream in Fig 4a. Fig 4b show the pixels inserted in an image frame of the same size as the user/target view in the order they arrive at the DSP, which is indicated by the references to the time periods of Fig 4a. This pixel stream may, thus, be seen as an intermediate image frame 202.

The intermediate image frame in Fig 4b Should be rearranged before presented to a user as a resulting image or resulting view 204, see Fig 4c. The rearrangement of the intermediate image frame may be performed by software in the application means 24 in the camera 2, by hardware in the camera 2, by software in a client computer receiving the pixel sequence, or by hardware in such an client computer. In Fig 4c the resulting view 204, representing the user/target view 102, is presented by referring to the pixel clock cycle periods corresponding to the periods shown in Figs 4a and 4b, from which each pixel originates.

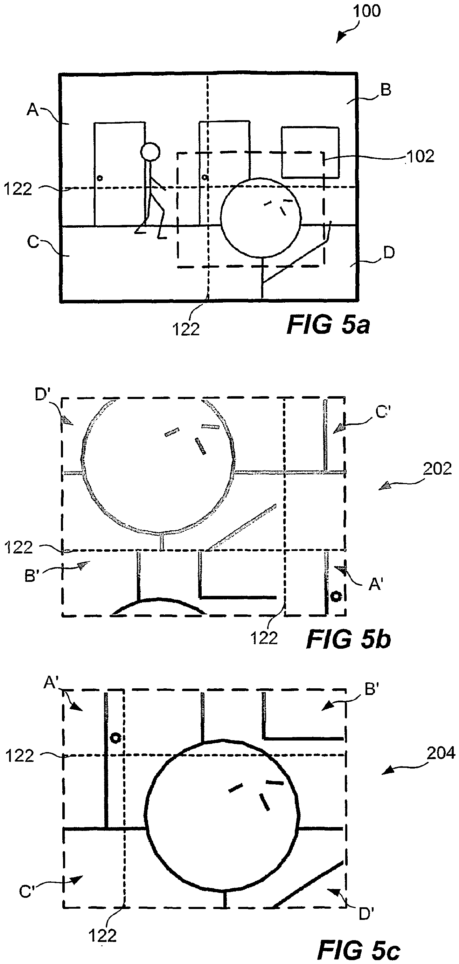

In Fig 5a-c the above mentioned effects are exemplified. Fig 5a shows a combined view of a monitored area 100 covered by four image sensors each registering view A, view B, view C, and view D, respectively, the boundary between different views are showed as dashed lines 122. It is at these boundaries, visualised by the dashed line 122, the overlap of adjacent views, as mentioned above, may be present. The combined view of monitored area 100 is never assembled into an existing image. The present user/target view 102 is marked by a dashed line. The intermediate image frame 202 represented by the pixels and the sequential order of the pixels in the pixel stream forwarded from the multiplexer is showed in Fig 5b. This figure correspond to the Fig 4b. As clearly indicated in the figure the contribution D' from view D is positioned in the upper left corner, the contribution C' from view C is positioned in the upper right corner, the contribution B' from view B is positioned in the lower left corner, the contribution A' from view A is positioned in the lower right corner.

In Fig 5c the intermediate image has been rearranged, as mentioned in connection with Fig 4c, resulting in the resulting image or resulting view 204.In order to make the multiplexer 15 forward the image data of the user/target view 102 to the DSP 20 in accordance with the above mentioned example, the select signal 28 may be implemented as follows. In the following UVx and UVy represent the x coordinate and y coordinate, respectively, of the desired upper left pixel 104 of the user/target view 102, tx and ty represent the coordinate of the pixel transferred to the multiplexer 15 from each of the image sensors 10a-d. Then the select signal 28 may be arranged to order the multiplexer 15 to forward the pixel at the input from:
image sensor 10a, view A, if tx ≥ UVx AND if ty ≥ UVy,
image sensor 10b, view B, if tx < UVx AND if ty ≥ UVy,
image sensor 10c, view C, if tx ≥ UVx AND if ty < UVy, and
image sensor 10d, view D, if tx < UVx AND if ty < UVy.

The above implementation may be implemented in a program of the digital camera or as hardware.

Accordingly, a user may control the position of the user/target view 102 within the total view 100, by means of an application or some control means, and receive an image or sequence of images comprising a portion of the image data of the total view 100 corresponding to the user/target view 102. The moving of the user/target view 102 then correspond to physical pan tilt movement of a camera having one image sensor of the size of the user/target view. Thus, the digital camera according to the invention is able to provide virtual pan/tilt functionality.

It may be difficult to achieve a perfect alignment of the views forming the total view 100, i.e. some image information from different image sensors may represent the same components. In such cases it may be appropriate to have an application process the image information from the DSP 20 in order to stitch portions from different image sensors 10a-b and provide one single continuous image, such programs generally are called image stitching programs.

According to one embodiment the camera may be arranged to enable a plurality of users receiving video images of different pan/tilt. This may be accomplished by generating a first image from a first pixel transfer cycle according to pan/tilt data of a first user and sending this first image to the first user. Then a second image may be generated from a second pixel transfer cycle according to pan/tilt data of a second user, the second image being sent to the second user. This may then continue for a third, a fourth, etc. user. When all users have received their images the camera may start all over again with user one. In other terms, in such an embodiment of the invention the image sensor selector outputs a select signal to the multiplexer which effects a time-division multiplexing the pan/tilt instructions of multiple users. This may be accomplished by driving the multiplexer to produce an image frame consistent with each successive users requirements on successive frame cycles of the image sensors. A first frame of target image data consistent with a first users pan/tilt requirements is multiplexed from the image data provided by the image sensors during a first frame cycle/interval. This target image data is delivered to the image processor which in turn displays or delivers it to the first user. Then during the next frame cycle the target image data consistent with the second users pan/tilt requirements is multiplexed from the image data provided by the image sensors during the second frame cycle/interval. This target image data is delivered to the image processor which in turn displays or delivers it to the second user. This may then continue for a third, a fourth, etc. user. When all users have received their images the camera may start all over again with user one. Accordingly, each of the users receives an image stream of the views they have selected. The number of simultaneous users having different pan/tilt that is possible depends on the frame rate that the camera is able to produce and the frame rate the users are willing to accept.

Further, according to one embodiment, the size of the user/target view 102 may be different from the size of each image sensor. Provided that this is the case the image sensor selector 16 has to have access to a value representing the desired width and has to consider this value when generating the select signal 28.

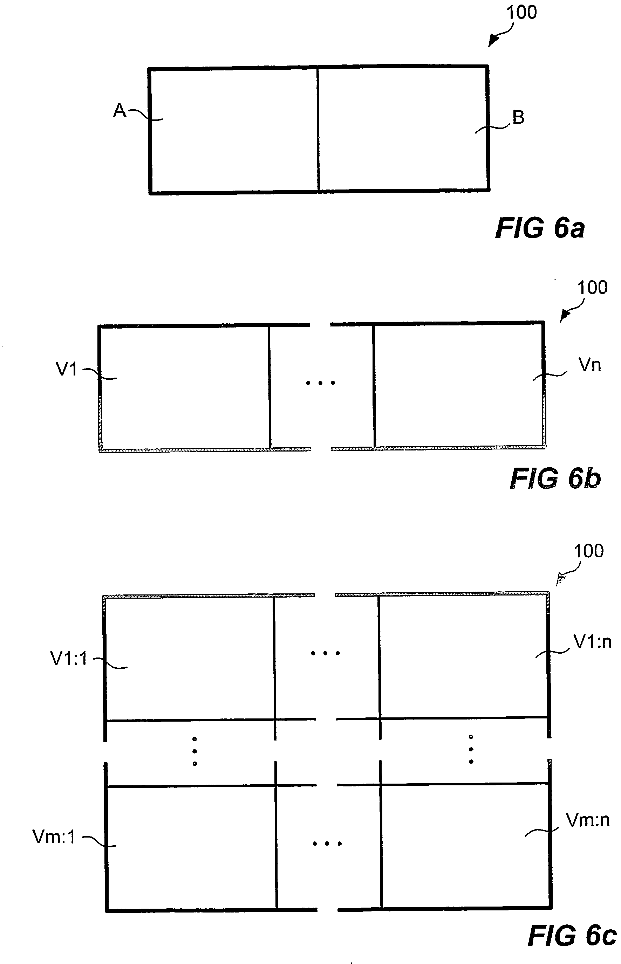

The invention is not limited to the arrangement of views as described in the embodiments and the example above. The camera may include two or more image sensors in order to capture images of a plurality of views. In Figs 6a-c a couple of examples of image view arrangements are showed. In Fig 6a an embodiment having a total view 100 including two views A and B , i.e. two image sensors, that are horizontally aligned is showed. If the user/target view is essentially of the same size as one of the views A and B, then there is no space for tilting but only for panning. However, if the user/target view is smaller than one of the views A and B both pan and tilt functionality is available. The views A and B may also be vertically aligned.

In Fig. 6b, an embodiment having a total view 100 including n views V1-Vn, wherein n may be any number, which are horizontally aligned. This embodiment may include n image sensors. As in the embodiment in Fig. 6a, this embodiment only allow panning if the user/target view have essentially the same size as one of the views V1-Vn. The views of the embodiment in Fig. 6b may also be vertically aligned.

In Fig. 6c, an embodiment having a total view 100 including n columns of views and m lines of views V1:1-Vn:m is shown, wherein n and m may be any number. This embodiment may include n•m image sensors. This embodiment may be used to make it possible to achieve large pan/tilt movements.

It is also possible to arrange the lenses and the image sensors so that each image sensor capture image information from views that are not adjacent to each other, i.e. unrelated image views. For example, a first view may be arranged to cover a doorway from a first room, a second view may be arranged to cover a doorway from a second room, a third view may be arranged to cover a window, and a fourth view may be arranged to cover an opening in the floor. The views may be at such distance from each other that it is not possible to cover them with relevant views being positioned adjacent to each other. In a case like this the panning and tilting results in a sliding transition between unrelated views. For example, if a user studies the first doorway and pan horizontally the user may scroll out the first doorway while the view of the second doorway come into view. Accordingly, the user may see a portion of each view simultaneously and may experience a boundary between the two views, because the image information of the objects between the two doors is not captured by the digital camera, during the panning.

According to another aspect of the invention, the image sensors may be controlled by means of timing signals that are not synchronous. By controlling the transfer from each image sensor individually and by considering both the timing of each image sensor and the selection of image sensor output it is possible to make the user/target view larger than one image sensor.

## Claims

1. Digital camera (2) having pan and/or tilt functionality, said camera (2) comprising:
an image processing means (19) for processing digital image data,
at least two image sensors (10a, 10b, 10c, 10d) arranged to output image data detected by the image sensors (10a, 10b, 10c, 10d) and to transfer the image data from each of the at least two image sensors (10a, 10b, 10c, 10d) pixel by pixel, **characterized by**:
an image sensor selector (16) including an output arranged to provide a select signal (28) indicating from which image sensor a pixel value to be forwarded to said image processing means (19) shall originate, the select signal (28) is based on at least one value indicating the present pan and/or tilt, and
a multiplexer (15) connected to the at least two image sensors (10a, 10b, 10c, 10d), the image processing means (19) and said output of the image sensor selector (16), the multiplexer (15) being arranged to receive one pixel value from each of the at least two image sensors (10a, 10b, 10c, 10d) during one pixel clock cycle and to forward the pixel value originating from the image sensor (10a, 10b, 10c, 10d) indicated by the image sensor selector (16) via the select signal (28).

2. Digital camera (2) according to claim 1, further comprising a timing generator (18), wherein said timing generator (18) is connected to the at least two image sensors (10a, 10b, 10c, 10d) and is arranged to provide said at least two image sensors (10a, 10b, 10c, 10d) with synchronized timing signals (26).

3. The digital camera (2) according to claim 2, wherein the timing generator (18) includes
a reset signal output which is connected to each image sensor (10a, 10b, 10c, 10d) for synchronizing the reset of all image sensors (10a, 10b, 10c, 10d), and
at least one pixel clock output which is connected to each image sensor (10a, 10b, 10c, 10d) for synchronizing the pixel output from said at least two image sensors (10a, 10b, 10c, 10d).

4. Digital camera (2) according to any one of claim 1 or claim 3, further comprising a light focusing system arranged to focus reflected light from at least a first view and a second view to said at least two image sensors, respectively, wherein said at least first view and second view are adjacent to each other, and wherein two adjacent views are overlapping each other.

5. Digital camera (2) according to any one of claims 1-4, wherein said image processing means (19) comprises rearranging means arranged to compose a continuous image from a pixel value stream originating from said multiplexer (15) and representing one image frame.

6. Digital camera (2) according to any one of claims 1-5, wherein the image sensor selector (16) includes responsiveness to multiple pan and/or tilt signal inputs from multiple users to output the select signal (28) to the multiplexer (15) which effects a time-division multiplexing of the pan/tilt instructions of multiple users.

7. Method in a camera (2) having pan and/or tilt functionality, said method **characterized by**:
sending image data pixel by pixel from at least two image sensors (10a, 10b, 10c, 10d) to separate inputs of a multiplexer (15),
generating a select signal (28) indicating from which image sensor (10a, 10b, 10c, 10d) the pixel value to be forwarded is received, the generating of said select signal (28) is based on at least one value indicating the pan and/or tilt for the image transfer in progress and the position within each of the at least two image sensors (10a, 10b, 10c, 10d) of the pixels the values of which are presently received at the multiplexer (15),
sending the select signal (28) to said multiplexer (15) indicating the image sensor (10a, 10b, 10c, 10d) from which the present pixel value is to be forwarded, and
forwarding the pixel value from the input of said multiplexer (15) receiving the pixel value originating from the image sensor (10a, 10b, 10c, 10d) indicated in the select signal (28) to the image processing means (19).

8. Method according to claim 7, further comprising the act of providing the at least two image sensors (10a, 10b, 10c, 10d) with synchronized timing signals (26).

9. Method according to claim 8, wherein the act of providing the at least two image sensors (10a, 10b, 10c, 10d) with synchronized timing signals (26) includes the act of providing the at least two image sensors (10a, 10b, 10c, 10d) with synchronized reset signals and synchronized pixel clock signals.

10. Method according to any one of claims 7-9, further comprising the acts of:
focusing light from a first view onto a first image sensor of the at least two image sensors (10a, 10b, 10c, 10d) and
focusing light from a second, adjacent and overlapping view, in respect of said first view, onto a second image sensor of the at least two image sensors (10a, 10b, 10c, 10d).

11. Method according to any one of claims 7-10, further comprising the act of rearranging the pixels within a pixel stream representing an image frame into a continuous image frame.

12. Method according to any one of claims 7-11, wherein said step of sending image data includes the act of sending image data from at least four image sensors (10a, 10b, 10c, 10d) to said multiplexer (15).

13. Method according to any one of claims 7-12, wherein the select signal (28) sent to the multiplexer (15) indicates at least two different inputs of the multiplexer (15) during the processing of one image frame.

## Patentansprüche

1. Digitalkamera (2) mit Panorama- und/oder Neigungsfunktionalität, wobei die Kamera (2) das Folgende umfasst:
ein Bildverarbeitungsmittel (19) zum Verarbeiten digitaler Bilddaten,
mindestens zwei Bildsensoren (10a, 10b, 10c, 10d), die dafür eingerichtet sind, von den Bildsensoren (10a, 10b, 10c, 10d) erfasste Bilddaten auszugeben und die Bilddaten aus jedem der mindestens zwei Bildsensoren (10a, 10b, 10c, 10d) Pixel für Pixel zu übertragen,
**gekennzeichnet durch**:
eine Bildsensor-Auswahleinheit (16), welche einen Ausgang umfasst, der dafür eingerichtet ist, ein Auswahlsignal (28) bereitzustellen, welches anzeigt, von welchem Bildsensor ein Pixelwert, der zu dem Bildverarbeitungsmittel (19) weiterzuleiten ist, stammen soll, wobei das Auswahlsignal (28) auf mindestens einem Wert basiert, der die aktuelle Schwenkposition und/oder Neigung anzeigt, und
einen Multiplexer (15), welcher mit den mindestens zwei Bildsensoren (10a, 10b, 10c, 10d), dem Bildverarbeitungsmittel (19) und dem Ausgang der Bildsensor-Auswahleinheit (16) verbunden ist, wobei der Multiplexer (15) dafür eingerichtet ist, während eines Pixeltaktzyklus von jedem der mindestens zwei Bildsensoren (10a, 10b, 10c, 10d) einen Pixelwert zu empfangen und den Pixelwert weiterzuleiten, der von dem Bildsensor (10a, 10b, 10c, 10d) stammt, der **durch** die Bildsensor-Auswahleinheit (16) über das Auswahlsignal (28) angezeigt wird.

2. Digitalkamera (2) nach Anspruch 1, welche ferner einen Taktgenerator (18) umfasst, wobei der Taktgenerator (18) mit den mindestens zwei Bildsensoren (10a, 10b, 10c, 10d) verbunden ist und dafür eingerichtet ist, synchronisierte Taktsignale (26) für die mindestens zwei Bildsensoren (10a, 10b, 10c, 10d) bereitzustellen.

3. Digitalkamera (2) nach Anspruch 2, wobei der Taktgenerator (18) das Folgende umfasst:
einen Rückstellsignalausgang, welcher mit jedem Bildsensor (10a, 10b, 10c, 10d) verbunden ist, zum Synchronisieren des Zurückstellens aller Bildsensoren (10a, 10b, 10c, 10d) und
mindestens einen Pixeltaktausgang, welcher mit jedem Bildsensor (10a, 10b, 10c, 10d) verbunden ist, zum Synchronisieren der Pixelausgaben aus den mindestens zwei Bildsensoren (10a, 10b, 10c, 10d).

4. Digitalkamera (2) nach Anspruch 1 oder Anspruch 3, welche ferner ein Lichtfokussierungssystem umfasst, welches dafür eingerichtet ist, reflektiertes Licht aus mindestens einer ersten Ansicht bzw. einer zweiten Ansicht auf die mindestens zwei Bildsensoren zu fokussieren, wobei die mindestens eine erste Ansicht und zweite Ansicht zueinander benachbart sind und wobei zwei benachbarte Ansichten sich überlappen.

5. Digitalkamera (2) nach einem der Ansprüche 1 bis 4, wobei das Bildverarbeitungsmittel (19) ein Neuanordnungsmittel umfasst, welches dafür eingerichtet ist, aus einem Pixelwertstrom, der aus dem Multiplexer (15) stammt und einen Bildrahmen darstellt, ein kontinuierliches Bild zusammenzusetzen.

6. Digitalkamera (2) nach einem der Ansprüche 1 bis 5, wobei die Bildsensor-Auswahleinheit (16) eine Reaktion auf mehrere Schwenk- und/oder Neigungssignaleingaben von mehreren Benutzern umfasst, um das Auswahlsignal (28) an den Multipexer (15) auszugeben, welcher einen Zeitmultiplex der Schwenk-/Neigungsbefehle mehrerer Benutzer bewirkt.

7. Verfahren in einer Kamera (2) mit Panorama- und/oder Neigungsfunktionalität, wobei das Verfahren durch das Folgende gekennzeichnet ist:
Senden von Bilddaten Pixel für Pixel aus mindestens zwei Bildsensoren (10a, 10b, 10c, 10d) an getrennte Eingänge eines Multiplexers (15),
Erzeugen eines Auswahlsignals (28), welches anzeigt, von welchem Bildsensor (10a, 10b, 10c, 10d) der weiterzuleitende Pixelwert empfangen wird, wobei das Erzeugen des Auswahlsignals (28) auf mindestens einem Wert, der die Schwenkposition und/oder Neigung für den bearbeiteten Bildtransfer anzeigt, und der Position der Pixel, deren Werte aktuell am Multiplexer (15) empfangen werden, in jedem der mindestens zwei Bildsensoren (10a, 10b, 10c, 10d) basiert,
Senden des Auswahlsignals (28) an den Multiplexer (15), welches den Bildsensor (10a, 10b, 10c, 10d) anzeigt, aus welchem der aktuelle Pixelwert weiterzuleiten ist, und
Weiterleiten des Pixelwerts vom Eingang des Multiplexers (15), der den Pixelwert empfängt, der von dem Bildsensor (10a, 10b, 10c, 10d) stammt, der in dem Auswahlsignal (28) angezeigt ist, zu dem Bildverarbeitungsmittel (19).

8. Verfahren nach Anspruch 7, welches ferner das Bereitstellen synchronisierter Taktsignale (26) für die mindestens zwei Bildsensoren (10a, 10b, 10c, 10d) umfasst.

9. Verfahren nach Anspruch 8, wobei das Bereitstellen synchronisierter Taktsignale (26) für die mindestens zwei Bildsensoren (10a, 10b, 10c, 10d) das Bereitstellen synchronisierter Rückstellsignale und synchronisierter Pixeltaktsignale für die mindestens zwei Bildsensoren (10a, 10b, 10c, 10d) umfasst.

10. Verfahren nach einem der Ansprüche 7 bis 9, welches ferner das Folgende umfasst:
Fokussieren von Licht aus einer ersten Ansicht auf einen ersten Bildsensor der mindestens zwei Bildsensoren (10a, 10b, 10c, 10d) und
Fokussieren von Licht aus einer zweiten, zu der ersten Ansicht benachbarten und mit dieser überlappenden Ansicht auf einen zweiten Bildsensor der mindestens zwei Bildsensoren (10a, 10b, 10c, 10d).

11. Verfahren nach einem der Ansprüche 7 bis 10, welches ferner das Neuanordnen der Pixel in einem Pixelstrom, welcher einen Bildrahmen darstellt, zu einem kontinuierlichen Bildrahmen umfasst.

12. Verfahren nach einem der Ansprüche 7 bis 11, wobei der Schritt des Sendens von Bilddaten das Senden von Bilddaten aus mindestens vier Bildsensoren (10a, 10b, 10c, 10d) zu dem Multiplexer (15) umfasst.

13. Verfahren nach einem der Ansprüche 7 bis 12, wobei das an den Multiplexer (15) gesendete Auswahlsignal (28) während der Verarbeitung eines Bildrahmens mindestens zwei verschiedene Eingänge des Multiplexers (15) anzeigt.

## Revendications

1. Caméra numérique (2) à fonctionnalité de panoramique et/ou d'inclinaison verticale, ladite caméra (2) comprenant :
un moyen de traitement d'images (19) pour traiter des données d'images numériques,
au moins deux capteurs d'images (10a, 10b, 10c, 10d) agencés pour délivrer des données d'images détectées par les capteurs d'images (10a, 10b, 10c, 10d) et pour transférer les données d'images de chacun des au moins deux capteurs d'images (10a, 10b, 10c, 10d) pixel par pixel, **caractérisée par** :
un sélecteur de capteur d'images (16) comprenant une sortie agencée pour fournir un signal de sélection (28) indiquant de quel capteur d'images une valeur de pixel à transférer au dit moyen de traitement d'images (19) doit provenir, le signal de sélection (28) étant basé sur au moins une valeur indiquant le panoramique actuel et/ou l'inclinaison verticale actuelle, et
un multiplexeur (15) connecté aux au moins deux capteurs d'images (10a, 10b, 10c, 10d), au moyen de traitement d'images (19) et à ladite sortie du sélecteur de capteur d'images (16), le multiplexeur (15) étant agencé pour recevoir une valeur de pixel de chacun des au moins deux capteurs d'images (10a, 10b, 10c, 10d) au cours d'un cycle d'horloge de pixel et pour transférer la valeur de pixel provenant du capteur d'images (10a, 10b, 10c, 10d) indiqué par le sélecteur de capteur d'images (16) par le biais du signal de sélection (28).

2. Caméra numérique (2) selon la revendication 1, comprenant en outre un générateur de timing (18), dans laquelle ledit générateur de timing (18) est connecté aux au moins deux capteurs d'images (10a, 10b, 10c, 10d) et est agencé pour fournir aux dits au moins deux capteurs d'images (10a, 10b, 10c, 10d) des signaux de timing synchronisés (26).

3. Caméra numérique (2) selon la revendication 2, dans laquelle le générateur de timing (18) comprend :
une sortie de signal de réinitialisation qui est connectée à chaque capteur d'images (10a, 10b, 10c, 10d) pour synchroniser la réinitialisation de tous les capteurs d'images (10a, 10b, 10c, 10d), et
au moins une sortie d'horloge de pixel qui est connectée à chaque capteur d'images (10a, 10b, 10c, 10d) pour synchroniser la sortie de pixel desdits au moins deux capteurs d'images (10a, 10b, 10c, 10d).

4. Caméra numérique (2) selon l'une quelconque des revendications 1 ou 3, comprenant en outre un moyen de focalisation de lumière agencé pour focaliser une lumière réfléchie d'au moins une première vue et une deuxième vue respectivement sur lesdits au moins deux capteurs d'images, dans laquelle lesdites au moins une première vue et une deuxième vue sont adjacentes l'une à l'autre, et dans laquelle deux vues adjacentes sont superposées l'une sur l'autre.

5. Caméra numérique (2) selon l'une quelconque des revendications 1 à 4, dans laquelle ledit moyen de traitement d'images (19) comprend un moyen de réagencement agencé pour composer une image continue à partir d'un flux de valeurs de pixels provenant dudit multiplexeur (15) et représentant une trame d'image.

6. Caméra numérique (2) selon l'une quelconque des revendications 1 à 5, dans laquelle le sélecteur de capteur d'images (16) comprend une réactivité à des multiples entrées de signaux de panoramique et/ou d'inclinaison verticale de multiples utilisateurs pour délivrer le signal de sélection (28) au multiplexeur (15) qui effectue un multiplexage à répartition dans le temps des instructions de panoramique et/ou d'inclinaison verticale de multiples utilisateurs.

7. Procédé dans une caméra (2) à fonctionnalité de panoramique et/ou d'inclinaison verticale, ledit procédé étant **caractérisé par** :
l'envoi de données d'images pixel par pixel d'au moins deux capteurs d'images (10a, 10b, 10c, 10d) pour séparer des entrées d'un multiplexeur (15),
la génération d'un signal de sélection (28) indiquant de quel capteur d'images (10a, 10b, 10c, 10d) la valeur de pixel à transférer est reçue, la génération dudit signal de sélection (28) est basée sur au moins une valeur indiquant le panoramique et/ou l'inclinaison verticale pour le transfert d'images en cours et la position à l'intérieur de chacun des au moins deux capteurs d'images (10a, 10b, 10c, 10d) des pixels dont les valeurs sont actuellement reçues au niveau du multiplexeur (15),
l'envoi du signal de sélection (28) au dit multiplexeur (15) indiquant le capteur d'images (10a, 10b, 10c, 10d) duquel la valeur de pixel actuelle doit être transférée, et
le transfert de la valeur de pixel de l'entrée dudit multiplexeur (15) recevant la valeur de pixel provenant du capteur d'images (10a, 10b, 10c, 10d) indiqué dans le signal de sélection (28) au moyen de traitement d'images (19).

8. Procédé selon la revendication 7, comprenant en outre la fourniture aux au moins deux capteurs d'images (10a, 10b, 10c, 10d) de signaux de timing synchronisés (26).

9. Procédé selon la revendication 8, dans lequel la fourniture aux au moins deux capteurs d'images (10a, 10b, 10c, 10d) de signaux de timing synchronisés (26) comprend la fourniture aux au moins deux capteurs d'images (10a, 10b, 10c, 10d) de signaux de réinitialisation synchronisés et de signaux d'horloge de pixel synchronisés.

10. Procédé selon l'une quelconque des revendications 7 à 9, comprenant en outre :
la focalisation de lumière d'une première vue sur un premier capteur d'images des au moins deux capteurs d'images (10a, 10b, 10c, 10d), et
la focalisation de lumière d'une deuxième vue adjacente superposée, par rapport à ladite première vue, sur un deuxième capteur d'images des au moins deux capteurs d'images (10a, 10b, 10c, 10d).

11. Procédé selon l'une quelconque des revendications 7 à 10, comprenant en outre le réagencement des pixels à l'intérieur d'un flux de pixels représentant une trame d'image dans une trame d'image continue.

12. Procédé selon l'une quelconque des revendications 7 à 11, dans lequel l'envoi de données d'images comprend l'envoi de données d'images d'au moins quatre capteurs d'images (10a, 10b, 10c, 10d) au dit multiplexeur (15).

13. Procédé selon l'une quelconque des revendications 7 à 12, dans lequel le signal de sélection (28) envoyé au multiplexeur (15) indique au moins deux entrées différentes du multiplexeur (15) au cours du traitement d'une trame d'image.
